(19) **Europäisches Patentamt / European Patent Office / Office européen des brevets**

(11) **EP 3 958 579 B1**

(12) **EUROPEAN PATENT SPECIFICATION**

(45) Date of publication and mention of the grant of the patent:
**24.09.2025 Bulletin 2025/39**

(21) Application number: **20191354.8**

(22) Date of filing: **17.08.2020**

(51) International Patent Classification (IPC):
*H04N 21/44* (2011.01)   *H04N 21/4385* (2011.01)
*H04N 21/434* (2011.01)   *H04N 21/845* (2011.01)
*H04N 21/482* (2011.01)   *H04N 21/6547* (2011.01)
*H04N 21/84* (2011.01)   *H04N 21/835* (2011.01)

(52) Cooperative Patent Classification (CPC):
**H04N 21/44016; H04N 21/4341; H04N 21/4348;**
**H04N 21/43853; H04N 21/4825; H04N 21/6547;**
**H04N 21/835; H04N 21/84; H04N 21/8456**

(54) **A MEDIA DECODER FOR DECODING STREAMED MEDIA AND A METHOD THEREFOR**

MEDIENDECODIERER ZUR DECODIERUNG VON GESTREAMTEN MEDIEN UND VERFAHREN DAFÜR

DÉCODEUR MULTIMÉDIA POUR DÉCODER UN SUPPORT DE TRANSMISSION EN CONTINU ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.02.2022 Bulletin 2022/08**

(73) Proprietor: **Dolby International AB Dublin, D02 VK60 (IE)**

(72) Inventor: **SPEELMANS, Pieter-Jan 3290 Diest (BE)**

(74) Representative: **IP HILLS NV Bellevue 5/501 9050 Gent-Ledeberg (BE)**

(56) References cited:
**US-A1- 2012 042 050   US-A1- 2016 261 665**

• **MURIEL DESCHANEL ET AL: "Draft DASH-IF Ad Insertion doc March 2014 - DASH-AdInsertion-draft_r36b", 17 March 2014 (2014-03-17), XP017844527, Retrieved from the Internet <URL:(Old): https://www.dvb.org/resources/ restricted/members/documents/TM-IPI/ TM-IPI3140_Draft-DASH-IF-Ad-Insertion-doc-March-2014.zip DASH-AdInsertion-draft_r36b.docx> [retrieved on 20140317]**

**Description**

**Technical Field**

The present disclosure relates to a media decoder for decoding streamed media and to a method therefor.

**Background**

Media streaming involves streaming content from a remote media service to client devices, typically from different content distribution networks, CDNs, to a media player application on a PC, a tablet, a smartphone, a set-up box, a TV, etc. Media content is often a mix of media content such as television programs, sport events, and, advertisement content. Transitioning between different types of streamed media content often requires complete re-configuration of the decoder of the media player due to for example differences in the media codec, the codec parameters, and decryption configuration used. Decoder re-configuration is time-consuming and may require communication with external services to retrieve a decryption key. This leads to playback stalling, i.e. the same media frame is being rendered for an extended duration of time, blank media frames insertion, audio-video desynchronization, drifting from the live endpoint, and so on.

US 2012/042050 A1 relates to selecting and retrieving an appropriate representation of multimedia content from a server based on the capabilities of a client device. US 2016/261665 A1 discloses various techniques for accessing one or more representations without using a manifest file for the representations. To this end, a layered coding transport session instance description, LSID, includes some of the manifest data used for start-up and/or continuous operation for accessing the media data. It further discloses a device that includes one or more media decoders configured to decode media data of different representations received by the layered coding transport, LCT.

**Summary**

It is an object of embodiments of the present disclosure to provide a solution for decoding streamed mixed type of media content assuring seamless media playback. It is a further object of embodiments of the present disclosure to avoid reconfiguration of the media decoder when transitioning between media types.

The scope of protection sought for various embodiments of the invention is set out by the independent claims. The embodiments and features described in this specification that do not fall within the scope of the independent claims, if any, are to be interpreted as examples useful for understanding various embodiments of the invention.

This object is achieved, according to a first example aspect of the present disclosure, by a method for decoding in a media decoder media streamed from a remote media service according to claim 1.

In other words, a media decoder receives a media stream comprising a sequence of media packages from a remote media service. The remote media service may be a Content Distribution Network, CDN, comprising one or more media servers. The media packages streamed from the remote media service comprise one or more media samples which may contain a video and/or an audio content or the like. The audio content may be embedded within the video or included in the media package. In addition to the media samples, the media packages are complemented by decoder configuration information required by the media decoder to decode the media samples of the received package. The decoder configuration information may comprise information on the required size of the memory buffer of the media decoder, timing information associated with the media sample, the type of the codec used to encode the media sample, the media sample resolution and dynamic range, the codec parameters, information for decryption initialization and so on.

The received decoder configuration information is then compared with an initial decoder configuration according to which the media decoder is configured. The initial decoder configuration for example indicates the size of the memory buffer of the media decoder, the type of the codec and codec parameters and possibly decrypting information pre-set in the media decoder.

In case no differences between the received decoder configuration information and the initial decoder configuration are identified, no modifications of the initial decoder configuration of the media decoder, nor modifications in the header information of the media samples are needed.

In case differences are identified, an updated decoder configuration is derived in accordance with a set of predefined rules. The set of predefined rules allows deriving an updated decoder configuration which is a parameterized version of the initial decoder configuration, i.e. the updated decoder configuration is a subset of initial decoder configuration. For example, the media decoder may be configured with an initial decoder configuration to decode encrypted media samples with a, higher dynamic range, multiple audio channels, , etc. than the media samples of the received media package, while the decoder configuration information corresponding to the media package may specify that the media samples are unencrypted, have standard dynamic range and that the audio has one audio channel. A standard dynamic range is a subset of high-dynamic range, one audio channel is a subset of multiple audio channels, unencrypted is a subset of decrypted, and so on. Finally, the one or more media samples are decoded by the media decoder using the updated decoder configuration.

Deriving updated decoder configuration in this manner allows the media samples of the respective media package to be decoded without reconfiguring the media decoder. As a result, seamless decoding and therefore playback of different types of streamed media content such as advertisement content inserted during intermissions or time-outs of broadcasted events as television, concert or sport programs, is achieved.

According to an example embodiment, the deriving the updated decoder configuration comprises modifying at least one of a memory buffer size parameter, a media sample timing information, a media codec type, a media codec parameters, and a media sample decryption initialization information of the received decoder configuration information.

At least one of the received decoder configuration information is modified. By doing so, an updated decoder configuration is derived which is a subset of the initial decoder configuration. This allows avoiding complete re-configuration of the media decoder, therefore, assuring seamless decoding of the streamed media.

According to an example embodiment, the method further comprises:

- receiving header information of the one or more media samples of the respective media package; and

- updating the header information in accordance with the set of predefined rules and the updated decoder configuration information; and

- forwarding the updated header information to the media decoder.

The header information comprises information about the size of the media sample, the timing information associated with the media sample, codec parameters for the decoding of the media sample, as well as information for decrypting the media sample. The information is sample-specific and hence may differ from a sample to sample. Thus, depending on the derived updated decoder configuration it may be necessary to update the header information of the media samples as well. By deriving updated header information of the media samples in accordance with the set of predefined rules and by taking into account the updated decoder configuration, it is ensured that the media samples are correctly decoded by the media decoder using the updated decoder configuration, without having to reconfigure the media decoder.

According to an example embodiment, the updating of the header information comprises updating at least one of a media sample size, a media sample timing information, a media sample codec parameter, and a media sample decryption information of the header information.

Depending on the modifications introduced to derive the updated decoder configuration, one or more of the parameters in the header information may need to be modified as well. By doing so updated header information is derived which is then used by the media decoder for the decoding of the media sample.

According to example embodiments, the method comprising:

- retrieving decoder configuration information of at least a subset of media packages of the streamed media and/or an initialization segment of the streamed media and/or other decoder configuration information;

- deriving the initial decoder configuration from the retrieved decoder configuration information in accordance with the set of predefined rules; and

- initializing the media decoder using the initial decoder configuration.

By deriving the decoder configuration information of at least a subset of media packages and/or of an initialization segment of the streamed media, and/or of other decoder configuration information sources such as a manifest file, the media decoder is able to derive an initial decoder configuration based on the decoder configuration information of a number of media packages and/or the manifest file. This allows initializing the media decoder prior to decoding the media packages with a decoder configuration encompassing the retrieved decoder configuration information for the subset of media packages. This ensures seamless decoding of the media samples of the respective media packages and avoids complete re-configuration of the media decoder.

According to example embodiments, the subset of media packages comprises one or more media packages. The media decoder may retrieve the decoder configuration information of one, a number of media packages, or even all media packages. For example, the media decoder may retrieve the decoder configuration information of the first media package of the streamed media or the decoder configuration information of the first media package and a number of subsequent media packages. Alternatively, the media decoder may retrieve decoder configuration information of one or more media packages selected in a random manner.

According to an example embodiment, the media packages may comprise different decoder configuration information.

By deriving initial configuration from media packages comprising different decoder configuration information, it is assured that the media decoder is initialized with a decoder configuration encompassing the decoder configurations of the media packages. This assures that the media samples of the respective media packages are seamlessly decoded, and complete reconfiguration of the media decoder is avoided.

According to an example embodiment, the deriving further comprises determining a generalized decoder configuration based on the retrieved decoder configuration information.

A generalized decoder configuration may be derived based on the decoder configuration information of one or more packages. By determining a generalized decoder configuration, package-based re-configuration is enabled which allows for seamless decoding and therefore playback of different types of streamed media.

According to an example embodiment, the set of predefined rules comprises rules for deriving, from the received decoder configuration information, the greatest common denominator for respective parameters of the initial decoder configuration.

A generalized decoder configuration is thus derived based on the received decoder configuration information by means of the greatest common denominator. The greatest common denominator allows deriving parameters for the initial decoding configuration encompassing the received decoder configuration information.

According to a second example aspect, a media decoder is disclosed for decoding media streamed from a remote media service according to claim 10.

According to an example embodiment, the controller is further configured to:

- receive header information of the one or more media samples of the respective media package;

- update the header information in accordance with the set of predefined rules; and

- forward the updated header information to the decoding pipeline.

According to an example embodiment, the initial decoder configuration is derived in accordance with the set of predefined rules and based on decoder configuration information of at least a subset of media packages of the streamed media and/or of an initialization segment of the streamed media and/or other decoder configuration information.

The other example embodiments of the first example aspect may further be applied as example embodiments to the second example aspect.

According to a third example aspect, a media player is disclosed comprising a media decoder according to the first example aspect.

According to a fourth example aspect, a computer program product is disclosed comprising computer-executable instructions for causing a media player to perform the method according to the second example aspect.

According to a fifth example aspect, a computer readable storage medium is disclosed comprising computer-executable instructions for performing the method according to the second aspect when the computer-executable instructions are run on a computer.

The various example embodiments of the second example aspect may be applied as example embodiments to the third, fourth, and fifth example aspects.

## Brief Description of the Drawings

Some example embodiments will now be described with reference to the accompanying drawings.

FIG.1 shows media servers and a media client according to an example embodiment of the present disclosure;

FIG.2A shows a block scheme of a media decoder according to an example embodiment of the present disclosure; and

FIG.2B shows the decoding process according to an example embodiment of the present disclosure;

FIG.2C shows steps for decoding streamed media according to an example embodiment of the present disclosure;

FIG.3A shows an example of streamed media packages comprising media samples and decoder configuration information;

FIG.3B shows the media packages of FIG.3A with updated decoder configuration information and media samples' header information according to an example embodiment of the present disclosure;

FIG.3C shows the media packages of FIG.3A with updated decoder configuration information and media samples' header information according to an example embodiment of the present disclosure;

FIG.4 shows an example embodiment of a suitable computing system for performing one or several steps in embodiments of the present disclosure.

## Detailed Description of Embodiment(s)

The present disclosure relates to the decoding of streamed media from a remote service to a media client. A media stream received by a client is a combination of ordered still pictures or frames that are decoded or decompressed and played one after the other within the media client. To this respect, the media client may be any device capable of receiving a digital representation of such media over a communication network and capable of decoding the representation into a sequence of frames that can be displayed on a screen to a user. Examples of devices that are suitable as a media client are desktop and laptop computers, smartphones, tablets, setup boxes, and TVs. A media client may also refer to a media player application running on any of such devices. Streaming of media refers to the concept that the media client can request the media from a remote media service and start the playback of the media upon receiving the first frames without having received all the frames of the complete media stream. A streaming service is then a remote service that can provide such media streaming upon request of the media client to the media service over a communication network, for example over the Internet, over a Wide Area Network (WAN) or a Local Area Network (LAN). Streaming service is typically provided by so-called Content Distribution Networks, CDNs, which is a geographically distributed system of media servers such as proxy or cache servers.

The media content may be streamed using different streaming protocols, such as such as High Efficiency Streaming Protocol, HESP, low latency Dynamic Adaptive Streaming over HTTP, LL-DASH, low latency HTTP live streaming, LL-HLS, other HAS methods, webRTC, RTMP, SRT, RTP, etc.

The media content may be streamed live or on demand. In both cases, the media client requests a media stream from the media server over the communication network. In the case of live streaming, the media server is typically the server where the media content is created, while in the case of streaming media on demand, the media server may be the origin server or a cache server of a content distribution network, CDN, where the media content is cached or stored.

The media content streamed live may be television programs, concert and sport events or breaking news announcements and the media content streamed on-demand may be recorded television programs, concert and sport events, or advertisement content. The advertisement content may be one or more ads scheduled one after another in a larger block.

Typically, the live media content and the media content on-demand, e.g. the advertisement content, are encoded using different codecs. Examples of video compression specification or standard are H.265/MPEG-H HEVC, H.264/MPEG-4 AVC, H.263/MPEG-4 Part 2, H.262/MPEG-2, SMPTE 421M (VC-1), AOMedia Video 1 (AV1) and VP9. Examples of audio compressions are AAC/MPEG-4, AC3, AMR/3GPP, ATRAC, and so on. Alternatively, the live media content and the media content on demand may be encoded with the same codec but using different codec parameters. Examples of codec parameters are media sample resolution, encoding level and profile, encoding color space and color range, encoding pixel aspect ratio, etc. Further, the live media content and the content on-demand may have different sample resolutions such as time scale, start offset, and sample rate. And finally, the live content may be encrypted while the content on demand, e.g. advertisement content, maybe not. Decryption parameters include the encryption schema, key IDs required for the decryption, encryption pattern, and so on.

Advertisement content is often streamed during intermissions of the media content whether streamed live or on demand, e.g. during the half-times and/or time outs of sport events. Advertisement content is inserted within the streamed media content. Breaking news announcements on the other hand are inserted into the media stream as soon as the content is ready for streaming.

As a result, the content received by the media client is a sequence of media packages comprising media samples which may have different resolution, may be encoded and compressed using different codecs, different codecs parameters, etc. In other words, the media stream received by the media client comprises different types of media packages. For example, the media stream may comprise media packages of type "A" comprising one type of media samples "S_A" and corresponding to decoder configuration information "C_A", and media packages of type "B" comprising another type of media samples "S_B" and corresponding to decoder configuration information "C_B". According to some streaming protocols, the decoder configuration information required for the decoding of the media samples of a respective media package may be included in the media package itself. According to other streaming protocols, the decoder configuration information may be split into common information and package-specific information with the common decoder configuration information typically being provided in an initialization segment of the media stream and/or other decoder configuration information in the form of a manifest file or similar, and, the package-specific decoder configuration information being provided in the media package itself. In other words, the media stream comprises media packages with different corresponding decoder configuration information.

Typically, when decoding such a mixed type media stream, conventional approaches require reconfiguration of the media decoder whenever a media package of a different type is received. Decoder reconfiguration is however time-consuming and may require communication with external services to retrieve a decryption key. This leads to playback stalling, i.e. the same media frame is being rendered for an extended duration of time, blank media frames insertion, audio-video desynchronization, drifting from the live endpoint, and so on.

To assure seamless media playback, the present disclosure describes a different approach that avoids reconfiguration of the media decoder. This is achieved by updating the decoder configuration information corresponding to a respective media package to a parameterized version of the decoder configuration used for the configuration of the media decoder. The proposed solution will be now explained below in more detail.

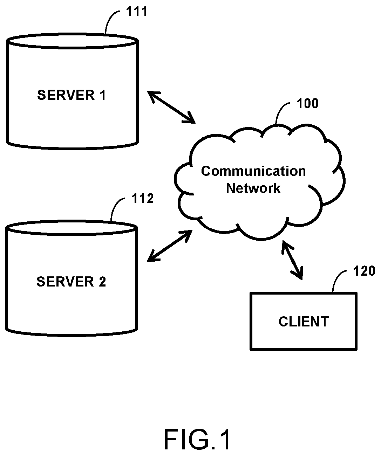

FIG.1 illustrates streaming media servers 111 and 112 which stream media over the communication network 100 to a media client 120 on a request from the media client. In this example, the media server 111 streams live media content such as a television program, and the media server 112 streams media content on-demand such as advertisement content. The live media stream streamed by the media server 111 comprises a sequence of media packages of type "A", each comprising a media sample, e.g. a video frame, and decoder configuration information, respectively. The media packages are streamed by the media server 111 as soon as a new video frame becomes available on the media server. That is, once available, the video frame is compressed, optionally packetized, and then sent to the media client 120 over the communication network 100. On the contrary, the advertisement content streamed from the media server 112 comprises a sequence of media packages of type "B" comprising one or more ads scheduled one after another in a larger block. Each media package may comprise one or more media samples, e.g. video segments, and decoder configuration information, respectively.

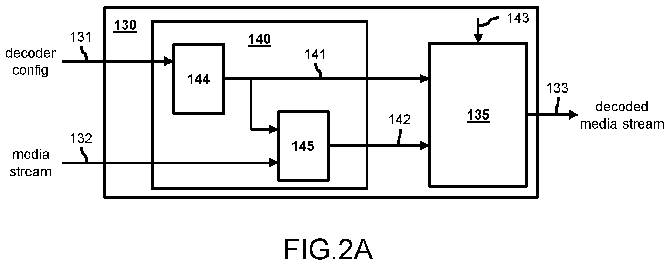

As shown in FIG.2A, the media client 120 comprises a media decoder 130 which in turn comprises a decoding pipeline 135 and a controller 140. The controller 140 is configured to configure the decoding pipeline 135 in accordance with the decoding configuration information of the media packages and the decoding pipeline 135 is configured to decode the respective media samples. The controller 140 is thus configured to control the decoding process in a package per package basis. For this purpose, the controller 140 comprises a processing unit 144 for identifying differences between the decoder configuration of the decoding pipeline 135 and the decoder configuration information of a respective media package and, when differences have been identified, to derive an updated decoder configuration in accordance with a set of predefined rules. The processing unit 144 is configured to receive the decoder configuration of the received media package 131. The controller 140 further comprises an additional processing unit 145 configured to receive the header information 132 of the respective media samples and the updated decoder configuration 141 and to output an updated header information 142 updated in accordance with the set of predefined rules. Alternatively, the controller may comprise one processing unit performing the functionality of the processing units 144 and 145.

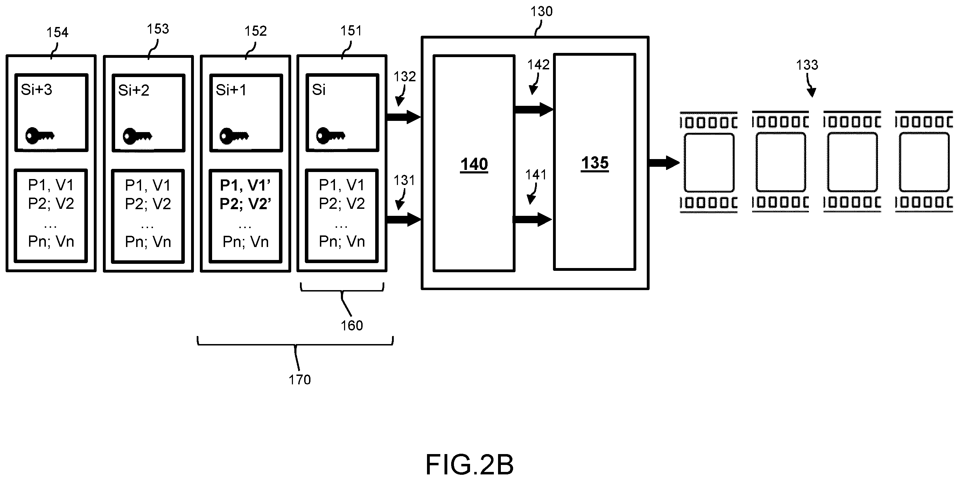

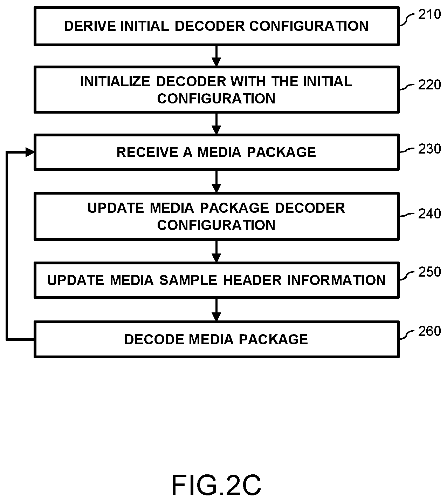

The decoding process will be now explained in more detail with reference to FIG.2B and FIG.2C. FIG.2B shows the decoding process of a live media content streamed from the media server 111 comprising media packages 151, 153 and 154, the media packages respectively comprising one or more media samples $S_i$, $S_{i+2}$ and $S_{i+3}$ and a number of parameters forming the decoding configuration information $P_1,...,P_n$ and advertisement content streamed from the media server 112 comprising media package 152 with media samples $S_{i+1}$ and a number of decoding parameters $P_1,...,P_n$. FIG.2C shows various steps performed by the media decoder 130 to decode the streamed media content according to example embodiments of the present disclosure.

According to some streaming protocols, when streaming media, the media client 120 receives an initialization segment in the form of a manifest file or similar from the streaming server, i.e. server 111, prior to receiving any media packages. The manifest file contains information about the streamed media content such as codec type and parameters, adaptive bitrate, media sample resolution, etc. as well as the web addresses, i.e. the URL location, of the respective media packages and their order. The media client 120 feeds the decoder configuration information 131 of the manifest file to the media decoder 130 and more specifically to the processing unit 144 of the controller 140. The controller 140 derives 210 therefrom an initial decoder configuration 143 which comprises a number of parameters $P_1,...,P_n$ having values $V_1,...,V_n$. The parameters may indicate information about :

- the size of the buffer of the media decoder;

- the timing information of the media samples such as timescale, start offset, sample rate, etc.

- the media codec such as H.265/MPEG-H HEVC, H.264/MPEG-4 AVC, H.263/MPEG-4 Part 2, H.262/MPEG-2, SMPTE 421M (VC-1), AOMedia Video 1 (AV1) and VP9;

- the media codec parameters such as media sample resolution, encoding level and profile, encoding color space and color range, encoding pixel aspect ratio, etc.; and

- possibly, the media sample decryption initialization information such as the encryption schema, key IDs required for the decryption, encryption pattern, etc.

For example, from the decoder configuration information 131 included in the manifest file, the controller may derive an initial decoder configuration 143 with the following parameters:

- media sample resolution set to "720p"
- dynamic range set to "standard"
- video coder set to "H.264"
- etc.

Optionally, the controller 140, i.e. the processing unit 144, may derive generalized decoder configuration based on the decoder configuration information 131 included from the manifest file and/or the decoder configuration information included in the initialization segment of the streamed media or similar. The generalization is performed based on the set of predetermined rules.

For example, the decoder configuration information 131 may include a set of parameters $\{(P_1,V_{1,M}; P_2,V_{2,M};...; P_n,V_{n,M}\}$, where index M indicates the parameter value obtained from the manifest file. For each derived parameter $P_j$, the processing unit 144 will determine the allowed value range $V_{j,R}$. The parameters and their associated value ranges may be stored in the memory of the media decoder 130 or the media client 120. The processing unit 144 will thus retrieve the associated value range of a respective parameter from the memory. The processing unit 144 will then replace the value of the derived parameter value $V_{j,M}$ with a new value $V_{j,G}$ derived from the allowed parameter range $V_{j,R}$. The new value is derived by employing the concept of greatest common denominator. By substituting the parameter value in this way, it is assured that the parameter value $V_{j,M}$ is a parameterized version of the value $V_{j,G}$. As a result, a generalized initial decoder configuration $C_G=\{(P_j,V_{j,G})\}$ is derived which parameters have respective values falling within the allowed value range, i.e. $P_j : V_{j,G} \in V_{j,R}$.

In the following step 220, the controller 140 configures or pre-sets the decoding pipeline 135 with the derived initial decoder configuration 143. In this example, the controller pre-sets the decoding pipeline 135 with decoder configuration which allows the media decoder 130 to decode media samples of 720p resolution with a high dynamic range using H.264 video codec.

In the next step 230, the media client 120 then receives a media package 151 which comprises decoder configuration information $\{P_1,V_{1,S}; P_2,V_{2,S};...;P_n,V_{n,S}\}$ and one or more media samples $S_i$. In this scenario, the media package is the first media package of a respective media stream. The decoder configuration information 131 and the media samples 132 are then fed to the media decoder 130.

The processing unit 144 of the controller compares the parameter values of the received decoder configuration 131 and the initial decoder configuration 143. Based on the comparison one or more differences therein between may be identified. For example, the decoder configuration information 131 of the media package 151 may indicate that media samples $S_i$ is of 720p resolution, have a standard dynamic range, are not encrypted and are encoded using the H-264 video codec. Clearly, the value of the dynamic range parameter $V_{j,S}$ of received decoder configuration information 131 differs from the value of the dynamic range $V_{j,G}$ of the initial decoder configuration 143. Furthermore, the value of the dynamic range $V_{j,S}$ is a subset of the value of dynamic range $V_{j,G}$ of the initial decoder configuration, i.e. a parameterized version of $V_{j,G}$.

In the next step 240, the processing unit 144 updates the received decoder configuration information 131. To do so, the processing unit 144 derives the greatest common denominator for every parameter having a value different from the value in the initial decoder configuration 143.

In this example, the processing unit 144 updates the received decoder configuration information by modifying the dynamic range from "standard" to "high". An updated decoder configuration information 141 is thus obtained.

Next, in step 250, the controller 140, i.e. processing unit 145, checks whether the header information of the respective media samples, $S_i$, 132 needs to be modified or updated to account for the modifications introduced in received decoder configuration information 131. To do so, the processing unit 145 retrieves the header information from the respective media samples. Typically, the header information includes information about:

- the size of the media samples;
- timing information of the media samples such as decoding time, composition time and presentation time;
- codec parameters for the media sample such as encoding level and profile, encoding color space and color range, encoding pixel aspect ratio, etc.; and

- if the sample is encrypted, decryption information for the media sample such as decryption initialization vector, Key IDs required for decryption, encryption pattern, etc.

In the same manner as in step 240, herein the processing unit 145 derives the greatest common denominator between the value of the parameters of the header information 132 of the respective media samples and the updated decoder configuration information 141.

In a final step, the controller 140 feeds the updated decoder configuration 141 and the media samples with the modified header information 142 into the decoding pipeline 135 which decodes 260 the media samples using the updated decoder configuration 141.

For example, the decoding pipeline 135 may be configured with initial decoder configuration 143 for decoding media packages which are encrypted with a specific encryption method, e.g. advanced encryption standard, AES, while the media package received by the media decoder may comprise decoder configuration information specifying that the one or more media samples in the package are not encrypted.

In such a case, the processing unit 144 updates the decoder configuration of the media package to specify that the one or more samples in the media package are to be decoded with a decoder which may decrypt media content encrypted with the specific encryption method, i.e. AES. It further updates the decoder configuration to specify that the media samples in the package are encrypted and adds encryption keys' identifiers needed for the specific encryption method. Finally, it also updates all offsets to reflect the changes in the decoder configuration.

The thus updated decoder configuration 141 is then fed to the processing unit 145 which then updates the header information of the respective one or more media samples of the media package as follows. The processing unit 145 adds initialization information required for decrypting a respective sample with the specific decryption method, i.e. AES. It further adds information that the respective sample is not encrypted, and, it updates all offsets to reflect the changes made to the header information. By doing so, the decoder pipeline 135 is instructed to decode the respective media samples using the updated decoder configuration 141 and the respective header information 142. In other words, the decoding pipeline will decode the media samples without applying the decryption method.

The steps 230 to 260 are repeated for every received media package comprising decoder configuration information which may be updated to an update decoder configuration being a subset of the initial decoder configuration 143. Thus, upon reception of media package 152 comprising decoder configuration $\{P_1,V_{1,Si+1}; P_2,V_{2,Si+1};...;P_n,V_{n,Si+1}\}$ and media samples, $S_{i+1}$, 132, the controller 140 identifies one or more differences between the initial decoder configuration $\{P_{1,G},V_{1,G};P_{2,G},V_{2,G};...;P_{n,G},V_{n,G}\}$ and the newly received decoder configuration information $\{P_1,V_{1,Si+1};P_2,V_{2,Si+1};...;P_n,V_{n,Si+1}\}$ and updates 240 the newly received decoder configuration accordingly. Similarly, the controller then updates 250 the header information of the media sample $S_{i+1}$ if needed. In case an updated decoder configuration is derived, the controller feeds the updated decoder configuration 141 and the media samples 142 to the decoding pipeline 135 which decodes 260 the media samples $S_{i+1}$ using the updated decoder configuration 141.

Sometimes, the media decoder may receive a media package comprising decoder configuration information, i.e. $C_D=\{(P_j,V_{j,D})\}$, for which is not possible to derive an updated decoder configuration. In other words, the received media package comprises decoder configuration information which differs significantly from the initial decoder configuration 143. In such a case, the controller 140 derives a new initial decoder configuration 143, i.e. $C_N=\{(P_j,V_{j,N})\}$, based on the current initial decoder configuration, i.e. $C_G=\{(P_j,V_{j,G})\}$, and the received decoder configuration information, i.e. $C_D=\{(P_j,V_{j,D})\}$,. This may be achieved in the same manner as disclosed above, i.e. by deriving the greatest common denominator for respective parameters of the current initial decoder configuration $C_G=\{(P_j,V_{j,G})\}$ and the received decoder configuration information, i.e. $C_D=\{(P_j,V_{j,D})\}$,. Similarly, the header information of the respective media samples is updated by deriving the greatest common denominator for the parameters in the header information 132 of the respective media samples and the new initial decoder configuration 143. The controller will then reconfigure the decoding pipeline 135 with the new initial decoder configuration 143 and will decode the media samples in accordance with the new initial configuration and updated header information. By deriving the new initial decoder configuration in this way, it is ensured that decoding pipeline may decode media packages with decoder configuration information being a subset of the initial decoder configuration $C_G=\{(P_j,V_{j,G})\}$ as well as media packages with decoder configuration information being a subset of the new initial decoder configuration, i.e. $C_N=\{(P_j,V_{j,N})\}$.

Although in the above example the respective media packages comprise decode configuration information having the same set of parameters, i.e. {P1,V1; P2,V2;...;Pn,Vn}, respective media packages may comprise different sets of decoder parameters. In that case, the generalization applies to the combination of all parameters. For example, one media package may comprise a decoder configuration information including five parameters, i.e. {P1,V1; P2,V2;...;P5,V5}, and a subsequent media package may comprise a decoder configuration information including four parameters, i.e. {P1,V1;P2,V2;...;P4,V4}. In this case, the fifth parameter, i.e. P5, is not included in the decoder configuration information of the subsequent media package. The controller 140 will thus modify the decoder configuration information of the subsequent media package by adding the fifth parameter, i.e. P5, with a default value, i.e. V5', which may be a subset of the value V5.

To derive an optimal generalized decoder configuration for the decoding pipeline, an initial decoder configuration may be derived based on combinations of the information derived from the initialization segment of the media stream, other configuration information such as manifest files and the information derived from a subset of media packages. The subset may comprise one or more media packages. For example, the media client 120 may request the decoder configuration information of a subset 160 comprising one media package, e.g. package 151; it may request the decoder configuration information of the subset 170 comprising media packages 151 and 152, i.e. the first and the second media packages of the respective media stream; it may request the decoder configuration information of a random selection of media packages, e.g. media packages 151 and 154; or any other combination of media packages.

In the case when the decoder configuration information required for the decoding of the media samples of a respective media package is provided in the media package itself, initial decoder configuration 143 may be derived based on the decoder configuration information retrieved from at least a subset of media packages, i.e. from the decoder configuration of one or more media packages. For this purpose, the media client 120 will request the decoder configuration information of one or more media packages prior to requesting the reception of the media packages. A first option would be to request the decoder configuration information of a subset of media packages comprising one or more subsequent media packages or one or more randomly selected packages. For example, the media client 120 may request the decoder configuration information of a subset 160 comprising media package 151; it may request the decoder configuration information of the subset 170 comprising media packages 151 and 152, i.e. the first and the second media packages in the media stream; it may request the decoder configuration information of a random selection of media packages, e.g. media packages 151 and 154; or any other combination of media packages. Alternatively, the decoder configuration of all media packages may be requested.

In either of the above cases, the media decoder will operate in the same manner as described above with reference to FIG.2B and FIG.2C irrespective of where the information used to derive the initial decoder configuration information is obtained from.

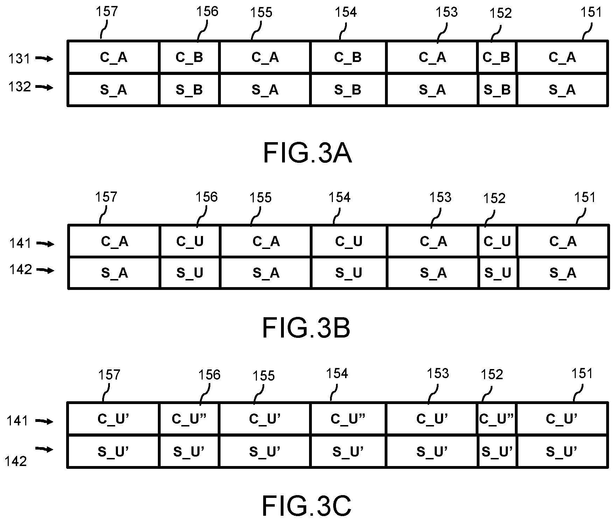

Some of the above-listed options are illustrated in FIG.3A to FIG.3C. FIG.3A shows a subset of streamed media packages comprising decoder configuration information 131 of type "A" and of type "B", indicated as C_A and C_B, and media samples 132 with header information indicated as S_A and S_B, respectively. FIG.3B shows the updated decoder configuration, i.e. C_U, as well as the updated header information, i.e. S_U, in the case where the initial decoder configuration 143 is derived based on the decoder configuration information of media package 151, i.e. based on the decoder configuration of type "A". In this example, the decoder configuration C_B and the header information S_B are modified to an updated decoder configuration C_U and an updated header information S_U.

Similarly, FIG.3C shows the updated decoder configuration, i.e. C_U' and C_U", as well as the updated header information, i.e. S_U' and S_U", in the case where the initial decoder configuration 143 is derived based on the decoder configuration information of a subset of media packages, i.e. based on the decoder configuration of type "A" and type "B". For example, the decoder configuration information of the subset of media packages 151-153 may be used. In other words, the decoder configuration C_A and the header information S_A are modified to an updated decoder configuration C_U' and an updated header information S_U', and the decoder configuration information C_B and the header information S_B to an updated decoder configuration C_U" and an updated header information S_U", respectively.

As detailed above, the updated decoder configurations and header information as well as the initial decoder configuration are derived based on a set of predefined rules which may be represented mathematically as detailed below.

Referring to the example shown in FIG.3B, an initial decoder configuration C may be derived based on the decoder configuration information of one media package, e.g. the media package $S_1$, 151. This may be the first media package of a live stream or an advertisement content. The obtained initial decoder configuration which is of type "A", i.e. $C_A$ $[S_1,S_2)$, may be generalized to a generalized decoder configuration, i.e. $C_U[S_1,S_2)$ as detailed in step 210 above by determining the greatest common denominator of the values for respective parameters of the received decoder configuration C_A. Mathematically, this may be expressed as follows:

$$C_A[S_i,S_{i+1}) \leftarrow C_U[S_i,S_{i+1}) \Leftrightarrow C_A[S_i,S_{i+1}) \subset C_U[S_i,S_{i+1}), \; P_{j,A} \in P_{j,U} \qquad (1)$$

The controller will thus configure the decoding pipeline 135 with the initial decoder configuration $C_U$.

In this example, the header information is also updated to account for the generalization of the decoder configuration. This is done as detailed in step 240 above by determining greatest common denominator between the values of the parameters in the header information and the updated decoder configuration. THe derivation of the updated header information, i.e. S_U, may be represented mathematically in the same manner as in Equation 1.

When a subsequent media package, i.e. the second media package, $S_2$, 152 containing decoder configuration of type "B", i.e. C_B, is received, the controller will update C_B to an updated decoder configuration C_U'. This allows avoiding complete re-configuration of the media decoder as the subsequent media package, i.e. packages 152, 154, and 156 containing media samples encoded with decoder configuration C_B, will be decoded by the decoding pipeline using the update decoder configuration C_U' which is a subset of the initial decoder configuration C_U. Mathematically, this may be expressed as follows. The decoder configuration of type "B" for media sample $S_{i+1}$, i.e. $C_B[S_{i+1},S_{i+2})$ is now replaced with the decoder configuration of type "U‴", which is a subset of the decoder configuration of type "U" derived from a preceding media sample $S_i$, i.e. $C_U[S_i,S_{i+1})$, i.e.

$$C_B[S_{i+1},S_{i+2}) \leftarrow C_{U'}[S_i,S_{i+1}) \Leftrightarrow C_{U'}[S_{i+1},S_{i+2}) \subset C_U[S_i,S_{i+1}), P_{j,U'} \in P_{j,U} \quad (2)$$

, wherein the parameter values of the decoder configuration C_U' are a parameterized version of the parameters of the initial decoder configuration C_U. Similarly to above, the updated decoder configuration C_U' may be derived by determining the greatest common denominator for respective parameters of the initial decoder configuration C_U and the received decoder configuration information C_B. The header information of the media samples S_B of the subsequent media package are also updated to S_U' by applying the greatest common denominator for the values of the parameters in the header information and the updated decoder configuration which may be expressed similarly as in Equation 2.

Referring to the example shown in FIG.3C, the initial decoder configuration C may be derived based on decoder configuration information from two or more media packages containing different decoder configuration information, e.g. the media packages, i.e. $S_1$ and $S_2$, 151 and 152. In such a case, the initial decoder configuration is derived in the following way.

If the decoder configurations of the respective media packages are different and a subset of each other, the more general configuration of the two decoder configurations may be selected as an initial decoder configuration 143. This is done in the same manner as detailed above and expressed in Equation 1. This assures that the derived initial decoder configuration, i.e. C_U, encompasses the decoder configurations of the media packages part of the subset. The updated decoder configuration and header information may be derived as detailed above and expressed in Equation 2.

If the decoder configurations are different and not a subset of each other, an decoder configuration of type "U", i.e. C_U, is derived based on the decoder configuration "A" and "B", i.e. C_A and C_B by determining an overarching value for the respective parameters of the decoder configurations C_A and C_B. This assures that the derived decoder configuration C_U encompasses the decoder configurations C_A and C_B. Mathematically, this may be expressed as follows:

$$C_A[S_i,S_{i+1}) + C_B[S_{i+1},S_{i+2}) = C_U[S_i,S_{i+2}) \Leftrightarrow C_A[S_i,S_{i+1}) \subset C_U[S_i,S_{i+2}) \wedge C_B[S_{i+1},S_{i+2}) \subset$$
$$C_U[S_i,S_{i+2}) \quad (3)$$

, wherein the parameter values of the decoder configuration C_A and C_B are a parameterized version of the parameters of the derived initial decoder configuration, i.e. $P_{j,A} \in P_{j,U}$ and $P_{j,B} \in P_{j,U}$.

Thus, when a media package is received comprising decoder configuration information C_A or C_B, i.e. any one of the packages 151-157, the controller will update the decoder configuration C_A or C_B to an updated decoder configuration C_U' or C_U" respectively, where C_U' and C_U" are both subsets of the decoder configuration C_U. This avoids complete re-configuration of the media decoder as the subsequent packages, i.e. packages 151 to 157 containing media samples encoded with decoder configuration C_A or C_B will be now decoded by the decoding pipeline using the updated decoder configuration, i.e. C_U' or C_U". Mathematically, this may be expressed as follows:

$$C_A[S_i,S_{i+1}) \leftarrow C_{U'}[S_i,S_{i+1}) \Leftrightarrow C_{U'}[S_i,S_{i+1}) \subset C_U[S_i,S_{i+2}), P_{j,U'} \in P_{j,U} \quad (4)$$

and

$$C_B[S_{i+1},S_{i+2}) \leftarrow C_{U''}[S_{i+1},S_{i+2}) \Leftrightarrow C_{U''}[S_{i+1},S_{i+2}) \subset C_U[S_i,S_{i+2}), P_{j,U''} \in P_{j,U} \quad (5)$$

, wherein the parameter values of the decoder configuration C_U' and C_U" are respectively parameterized versions of the parameters of the initial decoder configuration. Similarly, the header information of the media samples of the respective media packages is updated to S_U' and S_U" respectively to account for the modifications introduced in the decoder configuration.

The same rules apply when an initial decoder configuration is derived based on decoder configuration information of an initialization segment, e.g. a manifest file, alone or in combination with decoder configuration information of one or more media packages.

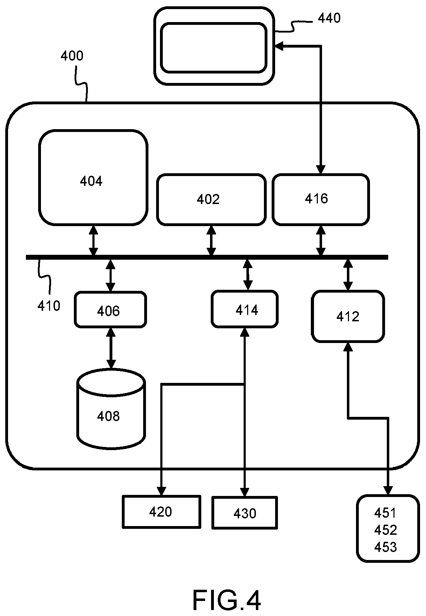

FIG.4 shows a suitable computing system 400 enabling to implement embodiments of the method for decoding streamed media according to the present disclosure. Computing system 400 may, in general, be formed as a suitable general-purpose computer and comprise a bus 410, a processor 402, a local memory 404, one or more optional input interfaces 414, one or more optional output interfaces 416, a communication interface 412, a storage element interface 406, and one or more storage elements 408. Bus 410 may comprise one or more conductors that permit communication among the components of the computing system 400. Processor 402 may include any type of conventional processor or microprocessor that interprets and executes programming instructions. Local memory 404 may include a random-access memory, RAM, or another type of dynamic storage device that stores information and instructions for execution by processor 402 and/or read-only memory, ROM, or another type of static storage device that stores static information and instructions for use by processor 402. Input interface 414 may comprise one or more conventional mechanisms that permit an operator or user to input information to the computing device 400, such as a keyboard 420, a mouse 430, a pen, voice recognition and/or biometric mechanisms, a camera, etc. Output interface 416 may comprise one or more conventional mechanisms that output information to the operator or user, such as a display 440, etc. Communication interface 412 may comprise any transceiver-like mechanism such as for example one or more Ethernet interfaces that enable the computing system 400 to communicate with other devices and/or systems, for example with other computing devices 451, 452, 453. The communication interface 412 of computing system 6400 may be connected to such another computing system by means of a local area network, LAN, or a wide area network, WAN, such as for example the internet. Storage element interface 406 may comprise a storage interface such as for example a Serial Advanced Technology Attachment, SATA, interface or a Small Computer System Interface, SCSI, for connecting bus 410 to one or more storage elements 408, such as one or more local disks, for example, SATA disk drives, and control the reading and writing of data to and/or from these storage elements 408. Although the storage element(s) 408 above is/are described as a local disk, in general, any other suitable computer-readable media such as a removable magnetic disk, optical storage media such as a CD or DVD, -ROM disk, solid-state drives, flash memory cards, ... could be used. Computing system 400 could thus correspond to the media client or media player 120 in the embodiments of the present disclosure illustrated by FIG.1, FIG.2A, and FIG.2B.

As used in this application, the term "circuitry" may refer to one or more or all of the following:

(a) hardware-only circuit implementations such as implementations in only analog and/or digital circuitry and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**EP 3 958 579 B1**

Claims

1. A method for decoding in a media decoder (130) media streamed from a remote media service (111;112), the streamed media comprising media packages (151,...,154), the respective media packages comprising decoder configuration information and one or more media samples, the method comprising the steps of:

   - configuring (220) the media decoder (130) according to an initial decoder configuration (143) **characterized by** a set of initial decoding parameters;
   - receiving (230) decoder configuration information (131) corresponding to a respective media package (151,...,154), wherein the decoder configuration information comprises one or more decoding parameters to decode the one or more media samples of the respective media package;
   - identifying one or more differences between the initial decoding parameters and the one or more decoding parameters;
   - upon identifying one or more differences, deriving (240), from the received decoder configuration information (131), an updated decoder configuration (141) comprising updated decoding parameters in accordance with a set of predefined rules such that the updated decoding parameters are a subset of the initial decoding parameters; and
   - decoding (260) the one or more media samples of the respective media package in accordance with the updated decoder configuration (141).

2. The method according to claim 1, wherein the deriving (240) the updated decoder configuration comprises modifying at least one of a memory buffer size parameter, a media sample timing information, a media codec type, a media codec parameters and a media sample decryption initialization information of the received decoder configuration information.

3. The method according to claim 1 or 2, further comprising:

   - receiving (230) header information of the one or more media samples of the respective media package; and
   - updating (250) the header information in accordance with the set of predefined rules and the update decoder configuration information; and
   - forwarding the updated header information (142) to the media decoder (130).

4. The method according to claim 3, wherein the updating (250) comprises updating at least one of a media sample size, a media sample timing information, a media sample codec parameter, and a media sample decryption information of the header information.

5. The method according to any of the preceding claims, the method comprising:

   - retrieving decoder configuration information of at least a subset of media packages (160;170) of the streamed media and/or of an initialization segment of the streamed media and/or other decoder configuration information;
   - deriving (210) the initial decoder configuration (143) from the retrieved decoder configuration information in accordance with the set of predefined rules; and
   - initializing (220) the media decoder using the initial decoder configuration (143).

6. The method according to claim 5, wherein the deriving (210) further comprises determining a generalized decoder configuration based on the retrieved decoder configuration information.

7. The method according to claim 5 or 6, wherein the subset (160;170) comprises one or more media packages (151;151-152).

8. The method according to claim 7, wherein the media packages (151-152) comprise different decoder configuration information.

9. The method according to any one of the preceding claims, wherein the set of predefined rules comprises rules for deriving the greatest common denominator for respective parameters of the initial decoder configuration and the received decoder configuration information.

10. A media decoder (130) for decoding media streamed from a remote media service (111;112), the streamed media comprising media packages (151,...,154), the respective media packages comprising decoder configuration information and one or more media samples, the media decoder comprising:

- a decoding pipeline (135) configured to decode the one or more media samples of the respective media packages; and
- a controller (140) configured to:

- configure (220) the decoding pipeline (135) in accordance with an initial decoder configuration (143) **characterized by** a set of initial decoding parameters;
- receive (230) decoder configuration information (131) corresponding to a respective media package (151,...,154), wherein the decoder configuration information comprises one or more decoding parameters to decode the one or more media samples of the respective media package;
- identify one or more differences between the initial decoding parameters and the one or more decoding parameters;
- derive (240), from the received decoder configuration information (131), an updated decoder configuration (141) comprising updated decoding parameters in accordance with a set of predefined rules such that the updated decoding parameters are a subset of the initial decoding parameters.

**11.** The media decoder according to claim 10, wherein the controller (140) is further configured to:

- receive (230) header information of the one or more media samples of the respective media package;
- update (250) the header information in accordance with the set of predefined rules; and
- forward the updated header information (142) to the decoding pipeline (135).

**12.** The media decoder according to claim 10 or 11, wherein the initial decoder configuration is derived in accordance with the set of predefined rules and based on decoder configuration information of at least a subset of media packages (160;170) of the streamed media and/or of an initialization segment of the media stream and/or other decoder configuration information.

**13.** A media player comprising a media decoder (130) according to any one of claims 10 to 12.

**14.** A computer program product comprising computer-executable instructions for causing a media player to perform the method according to any one of claims 1 to 9.

**15.** A computer readable storage medium comprising computer-executable instructions for performing the method according to any one of claims 1 to 9 when the computer-executable instructions are run on a computer.

**Patentansprüche**

**1.** Verfahren zum Decodieren, in einem Mediendecodierer (130), von Medien, die von einem entfernten Mediendienst (111; 112) gestreamt werden, wobei die gestreamten Medien Medienpakete (151,...,154) umfassen, wobei die jeweiligen Medienpakete Decodiererkonfigurationsinformationen und eine oder mehrere Medienproben umfassen, wobei das Verfahren die folgenden Schritte umfasst:

- Konfigurieren (220) des Mediendecodierers (130) gemäß einer anfänglichen Decodiererkonfiguration (143), die durch einen Satz von anfänglichen Decodierparametern gekennzeichnet ist;
- Empfangen (230) von Decodiererkonfigurationsinformationen (131) entsprechend einem jeweiligen Medienpaket (151,...,154), wobei die Decodiererkonfigurationsinformationen einen oder mehrere Decodierparameter umfassen, um die eine oder mehreren Medienproben des jeweiligen Medienpakets zu decodieren;
- Identifizieren von einem oder mehreren Unterschieden zwischen den anfänglichen Decodierparametern und dem einen oder den mehreren Decodierparametern;
- beim Identifizieren von einem oder mehreren Unterschieden, Ableiten (240), aus den empfangenen Decodiererkonfigurationsinformationen (131), einer aktualisierten Decodiererkonfiguration (141), die aktualisierte Decodierparameter umfasst, in Übereinstimmung mit einem Satz von vordefinierten Regeln, sodass die aktualisierten Decodierparameter ein Teilsatz der anfänglichen Decodierparameter sind; und
- Decodieren (260) der einen oder mehreren Medienproben des jeweiligen Medienpakets in Übereinstimmung mit der aktualisierten Decodiererkonfiguration (141).

**2.** Verfahren gemäß Anspruch 1, wobei das Ableiten (240) der aktualisierten Decodiererkonfiguration Modifizieren von zumindest einem von einem Speicherpuffergrößenparameter, einer Medienprobenzeitsteuerungsinformation, einem Mediencodectypen, einem Mediencodecparameter und einer Medienprobenentschlüsselungsinitialisierungsinformation der empfangenen Decodiererkonfigurationsinformationen umfasst.

**3.** Verfahren gemäß Anspruch 1 oder 2, ferner umfassend:

- Empfangen (230) von Header-Informationen von der einen oder den mehreren Medienproben des jeweiligen Medienpakets; und
- Aktualisieren (250) der Header-Informationen in Übereinstimmung mit dem Satz von vordefinierten Regeln und den Aktualisierungsdecodiererkonfigurationsinformationen; und
- Weiterleiten der aktualisierten Header-Informationen (142) an den Mediendecodierer (130).

**4.** Verfahren gemäß Anspruch 3, wobei das Aktualisieren (250) Aktualisieren von zumindest einem von einer Medienprobengröße, einer Medienprobenzeitsteuerungsinformation, einem Medienprobencodecparameter und einer Medienprobenentschlüsselungsinformation der Header-Informationen umfasst.

**5.** Verfahren gemäß einem der vorhergehenden Ansprüche, wobei das Verfahren Folgendes umfasst:

- Abrufen von Decodiererkonfigurationsinformationen von zumindest einem Teilsatz von Medienpaketen (160; 170) der gestreamten Medien und/oder von einem Initialisierungssegment der gestreamten Medien und/oder anderen Decodiererkonfigurationsinformationen;
- Ableiten (210) der anfänglichen Decodiererkonfiguration (143) aus den abgerufenen Decodiererkonfigurationsinformationen in Übereinstimmung mit dem Satz von vordefinierten Regeln; und
- Initialisieren (220) des Mediendecodierers unter Verwendung der anfänglichen Decodiererkonfiguration (143).

**6.** Verfahren gemäß Anspruch 5, wobei das Ableiten (210) ferner Bestimmen einer verallgemeinerten Decodiererkonfiguration basierend auf den abgerufenen Decodiererkonfigurationsinformationen umfasst.

**7.** Verfahren gemäß Anspruch 5 oder 6, wobei der Teilsatz (160; 170) ein oder mehrere Medienpakete (151; 151-152) umfasst.

**8.** Verfahren gemäß Anspruch 7, wobei die Medienpakete (151-152) unterschiedliche Decodiererkonfigurationsinformationen umfassen.

**9.** Verfahren gemäß einem der vorhergehenden Ansprüche, wobei der Satz von vordefinierten Regeln Regeln zum Ableiten des größten gemeinsamen Nenners für jeweilige Parameter der anfänglichen Decodiererkonfiguration und der empfangenen Decodiererkonfigurationsinformationen umfasst.

**10.** Mediendecodierer (130) zum Decodieren von Medien, die von einem entfernten Mediendienst (111; 112) gestreamt werden, wobei die gestreamten Medien Medienpakete (151,...,154) umfassen, wobei die jeweiligen Medienpakete Decodiererkonfigurationsinformationen und eine oder mehrere Medienproben umfassen, wobei der Mediendecodierer Folgendes umfasst:

- eine Decodierpipeline (135), die konfiguriert ist, um die eine oder mehreren Medienproben der jeweiligen Medienpakete zu decodieren; und
- eine Steuerung (140), die zu Folgendem konfiguriert ist:

  - Konfigurieren (220) der Decodierpipeline (135) in Übereinstimmung mit einer anfänglichen Decodiererkonfiguration (143), die durch einen Satz von anfänglichen Decodierparametern gekennzeichnet ist;
  - Empfangen (230) von Decodiererkonfigurationsinformationen (131) entsprechend einem jeweiligen Medienpaket (151,...,154), wobei die Decodiererkonfigurationsinformationen einen oder mehrere Decodierparameter umfassen, um die eine oder mehreren Medienproben des jeweiligen Medienpakets zu decodieren;
  - Identifizieren von einem oder mehreren Unterschieden zwischen den anfänglichen Decodierparametern und dem einen oder den mehreren Decodierparametern;
  - Ableiten (240), aus den empfangenen Decodiererkonfigurationsinformationen (131), einer aktualisierten Decodiererkonfiguration (141), die aktualisierte Decodierparameter umfasst, in Übereinstimmung mit einem Satz von vordefinierten Regeln, sodass die aktualisierten Decodierparameter ein Teilsatz der anfänglichen Decodierparameter sind.

11. Mediendecodierer gemäß Anspruch 10, wobei die Steuerung (140) ferner zu Folgendem konfiguriert ist:

- Empfangen (230) von Header-Informationen von der einen oder den mehreren Medienproben des jeweiligen Medienpakets;
- Aktualisieren (250) der Header-Informationen in Übereinstimmung mit dem Satz von vordefinierten Regeln; und
- Weiterleiten der aktualisierten Header-Informationen (142) an die Decodierpipeline (135).

12. Mediendecodierer gemäß Anspruch 10 oder 11, wobei die anfängliche Decodiererkonfiguration in Übereinstimmung mit dem Satz von vordefinierten Regeln und basierend auf Decodiererkonfigurationsinformationen von zumindest einem Teilsatz von Medienpaketen (160; 170) der gestreamten Medien und/oder von einem Initialisierungssegment des Medienstreams und/oder anderen Decodiererkonfigurationsinformationen abgeleitet ist.

13. Medienplayer, umfassend einen Mediendecodierer (130) gemäß einem der Ansprüche 10 bis 12.

14. Computerprogrammprodukt, umfassend computerausführbare Anweisungen, um zu bewirken, dass ein Medienplayer das Verfahren gemäß einem der Ansprüche 1 bis 9 durchführt.

15. Computerlesbares Speichermedium, umfassend computerausführbare Anweisungen zum Durchführen des Verfahrens gemäß einem der Ansprüche 1 bis 9, wenn die computerausführbaren Anweisungen auf einem Computer laufen.

**Revendications**

1. Procédé permettant le décodage dans un décodeur multimédia (130) de contenu multimédia diffusé en continu à partir d'un service multimédia à distance (111 ; 112), le contenu multimédia diffusé en continu comprenant des paquets multimédias (151, ..., 154), les paquets multimédias respectifs comprenant des informations de configuration de décodeur et un ou plusieurs échantillons multimédias, le procédé comprenant les étapes de :

- configuration (220) du décodeur multimédia (130) selon une configuration de décodeur initiale (143) **caractérisée par** un ensemble de paramètres de décodage initiaux ;
- réception (230) d'informations de configuration de décodeur (131) correspondant à un paquet multimédia respectif (151, ..., 154), lesdites informations de configuration de décodeur comprenant un ou plusieurs paramètres de décodage pour décoder le ou les échantillons multimédias du paquet multimédia respectif ;
- identification d'une ou plusieurs différences entre les paramètres de décodage initiaux et le ou les paramètres de décodage ;
- lors de l'identification d'une ou de plusieurs différences, la dérivation (240), à partir des informations de configuration de décodeur reçues (131), d'une configuration de décodeur mise à jour (141) comprenant des paramètres de décodage mis à jour conformément à un ensemble de règles prédéfinies de sorte que les paramètres de décodage mis à jour soient un sous-ensemble des paramètres de décodage initiaux ; et
- décodage (260) du ou des échantillons multimédias du paquet multimédia respectif conformément à la configuration de décodeur mise à jour (141).

2. Procédé selon la revendication 1, ladite dérivation (240) de la configuration de décodeur mise à jour comprenant la modification d'au moins l'un d'un paramètre de taille de mémoire tampon, des informations temporelles d'échantillon multimédia, d'un type de codec multimédia, des paramètres de codec multimédia et des informations d'initialisation de déchiffrement d'échantillon multimédia des informations de configuration de décodeur reçues.

3. Procédé selon la revendication 1 ou 2, comprenant en outre :

- la réception (230) d'informations d'en-tête du ou des échantillons multimédias du paquet multimédia respectif ; et
- la mise à jour (250) des informations d'en-tête conformément à l'ensemble de règles prédéfinies et aux informations de configuration de décodeur de mise à jour ; et
- le transfert des informations d'en-tête mises à jour (142) au décodeur multimédia (130).

**4.** Procédé selon la revendication 3, ladite mise à jour (250) comprenant la mise à jour d'au moins l'un d'une taille d'échantillon multimédia, des informations temporelles d'échantillon multimédia, d'un paramètre de codec d'échantillon multimédia et des informations de déchiffrement d'échantillon multimédia des informations d'en-tête.

**5.** Procédé selon l'une quelconque des revendications précédentes, le procédé comprenant :

- la récupération des informations de configuration de décodeur d'au moins un sous-ensemble de paquets multimédias (160 ; 170) du contenu multimédia diffusé en continu et/ou d'un segment d'initialisation du contenu multimédia diffusé en continu et/ou d'autres informations de configuration de décodeur ;
- la dérivation (210) de la configuration de décodeur initiale (143) à partir des informations de configuration de décodeur récupérées conformément à l'ensemble de règles prédéfinies ; et
- l'initialisation (220) du décodeur multimédia à l'aide de la configuration de décodeur initiale (143).

**6.** Procédé selon la revendication 5, ladite dérivation (210) comprenant en outre la détermination d'une configuration de décodeur généralisée sur la base des informations de configuration de décodeur récupérées.

**7.** Procédé selon la revendication 5 ou 6, ledit sous-ensemble (160 ; 170) comprenant un ou plusieurs paquets multimédias (151 ; 151-152).

**8.** Procédé selon la revendication 7, lesdits paquets multimédias (151-152) comprenant différentes informations de configuration de décodeur.

**9.** Procédé selon l'une quelconque des revendications précédentes, ledit ensemble de règles prédéfinies comprenant des règles pour dériver le plus grand dénominateur commun pour des paramètres respectifs de la configuration de décodeur initiale et des informations de configuration de décodeur reçues.

**10.** Décodeur multimédia (130) permettant le décodage de contenu multimédia diffusé en continu à partir d'un service multimédia à distance (111 ; 112), le contenu multimédia diffusé en continu comprenant des paquets multimédias (151, ..., 154), les paquets multimédias respectifs comprenant des informations de configuration de décodeur et un ou plusieurs échantillons multimédias, le décodeur multimédia comprenant :

- un pipeline de décodage (135) configuré pour décoder le ou les échantillons multimédias des paquets multimédias respectifs ; et
- un dispositif de commande (140) configuré pour :

- configurer (220) le pipeline de décodage (135) conformément à une configuration de décodeur initiale (143) **caractérisée par** un ensemble de paramètres de décodage initiaux ;
- recevoir (230) des informations de configuration de décodeur (131) correspondant à un paquet multimédia respectif (151, ..., 154), lesdites informations de configuration de décodeur comprenant un ou plusieurs paramètres de décodage pour décoder le ou les échantillons multimédias du paquet multimédia respectif ;
- identifier une ou plusieurs différences entre les paramètres de décodage initiaux et le ou les paramètres de décodage ;
- dériver (240), à partir des informations de configuration de décodeur reçues (131), une configuration de décodeur mise à jour (141) comprenant des paramètres de décodage mis à jour conformément à un ensemble de règles prédéfinies de sorte que les paramètres de décodage mis à jour soient un sous-ensemble des paramètres de décodage initiaux.

**11.** Décodeur multimédia selon la revendication 10, ledit dispositif de commande (140) étant en outre configuré pour :

- recevoir (230) des informations d'en-tête du ou des échantillons multimédias du paquet multimédia respectif ;
- mettre à jour (250) des informations d'en-tête conformément à l'ensemble de règles prédéfinies ; et
- transférer les informations d'en-tête mises à jour (142) au pipeline de décodage (135).

**12.** Décodeur multimédia selon la revendication 10 ou 11, ladite configuration de décodeur initiale étant dérivée conformément à l'ensemble de règles prédéfinies et sur la base des informations de configuration de décodeur d'au moins un sous-ensemble de paquets multimédias (160 ; 170) du contenu multimédia diffusé en continu et/ou d'un segment d'initialisation du flux multimédia et/ou d'autres informations de configuration de décodeur.

13. Lecteur multimédia comprenant un décodeur multimédia (130) selon l'une quelconque des revendications 10 à 12.

14. Produit-programme informatique comprenant des instructions exécutables par ordinateur pour amener un lecteur multimédia à réaliser le procédé selon l'une quelconque des revendications 1 à 9.

15. Support de stockage lisible par ordinateur comprenant des instructions exécutables par ordinateur en vue de la réalisation du procédé selon l'une quelconque des revendications 1 à 9 lorsque les instructions exécutables par ordinateur sont exécutées sur un ordinateur.

FIG.1

FIG.2A

FIG.2B

EP 3 958 579 B1

EP 3 958 579 B1

```
┌─────────────────────────────────────────┐
│   DERIVE INITIAL DECODER CONFIGURATION   │─── 210
└─────────────────────────────────────────┘
                    │
                    ▼
┌─────────────────────────────────────────┐
│    INITIALIZE DECODER WITH THE INITIAL   │─── 220
│              CONFIGURATION               │
└─────────────────────────────────────────┘
                    │
                    ▼
┌─────────────────────────────────────────┐
│          RECEIVE A MEDIA PACKAGE         │─── 230
└─────────────────────────────────────────┘
                    │
                    ▼
┌─────────────────────────────────────────┐
│       UPDATE MEDIA PACKAGE DECODER       │─── 240
│              CONFIGURATION               │
└─────────────────────────────────────────┘
                    │
                    ▼
┌─────────────────────────────────────────┐
│    UPDATE MEDIA SAMPLE HEADER INFORMATION│─── 250
└─────────────────────────────────────────┘
                    │
                    ▼
┌─────────────────────────────────────────┐
│           DECODE MEDIA PACKAGE           │─── 260
└─────────────────────────────────────────┘
```

FIG.2C

EP 3 958 579 B1

| | 157 | 156 | 155 | 154 | 153 | 152 | 151 |
|---|---|---|---|---|---|---|---|
| 131 → | C_A | C_B | C_A | C_B | C_A | C_B | C_A |
| 132 → | S_A | S_B | S_A | S_B | S_A | S_B | S_A |

## FIG.3A

| | 157 | 156 | 155 | 154 | 153 | 152 | 151 |
|---|---|---|---|---|---|---|---|
| 141 → | C_A | C_U | C_A | C_U | C_A | C_U | C_A |
| 142 → | S_A | S_U | S_A | S_U | S_A | S_U | S_A |

## FIG.3B

| | 157 | 156 | 155 | 154 | 153 | 152 | 151 |
|---|---|---|---|---|---|---|---|
| 141 → | C_U' | C_U" | C_U' | C_U" | C_U' | C_U" | C_U' |
| 142 → | S_U' | S_U' | S_U' | S_U' | S_U' | S_U' | S_U' |

## FIG.3C

FIG.4

EP 3 958 579 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012042050 A1

- US 2016261665 A1